(19) Europäisches Patentamt
European Patent Office
Office européen des brevets

(11) Veröffentlichungsnummer: **0 278 320 B1**

(12) **EUROPÄISCHE PATENTSCHRIFT**

(45) Veröffentlichungstag der Patentschrift: **05.01.94**

(51) Int. Cl.[5]: **C09B 67/26**, C09B 67/54, //D06P1/38

(21) Anmeldenummer: **88101129.0**

(22) Anmeldetag: **27.01.88**

Die Akte enthält technische Angaben, die nach dem Eingang der Anmeldung eingereicht wurden und die nicht in dieser Patentschrift enthalten sind.

# (54) Verfahren zur Herstellung einer konzentrierten wässrigen Reaktivfarbstoff-Lösung.

(30) Priorität: **07.02.87 DE 3703738**

(43) Veröffentlichungstag der Anmeldung:
**17.08.88 Patentblatt 88/33**

(45) Bekanntmachung des Hinweises auf die Patenterteilung:
**05.01.94 Patentblatt 94/01**

(84) Benannte Vertragsstaaten:
**CH DE FR GB LI**

(56) Entgegenhaltungen:
**EP-A- 0 029 960**
**EP-A- 0 141 996**
**EP-A- 0 168 751**
**EP-A- 0 210 378**
**DE-A- 3 148 878**
**FR-A- 2 416 926**

(73) Patentinhaber: **BAYER AG**
**D-51368 Leverkusen(DE)**

(72) Erfinder: **Koll, Jochen, Dipl.-Ing.**
**Am Telegraf 40**
**D-5068 Odenthal(DE)**
Erfinder: **Wolff, Joachim, Dr.**
**Schlingenhovener Strasse 38**
**D-5068 Odenthal(DE)**
Erfinder: **Szeymies, Detlef, Dr.**
**Bergstrasse 91**
**D-5067 Kürten(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 278 320 B1

Rank Xerox (UK) Business Services
(3.10/3.09/3.3.3)

## Beschreibung

Die Erfindung betrifft ein Verfahren zur Herstellung von konzentrierten lagerstabilen wäßrigen Lösungen des Farbstoffs der Formel (1)

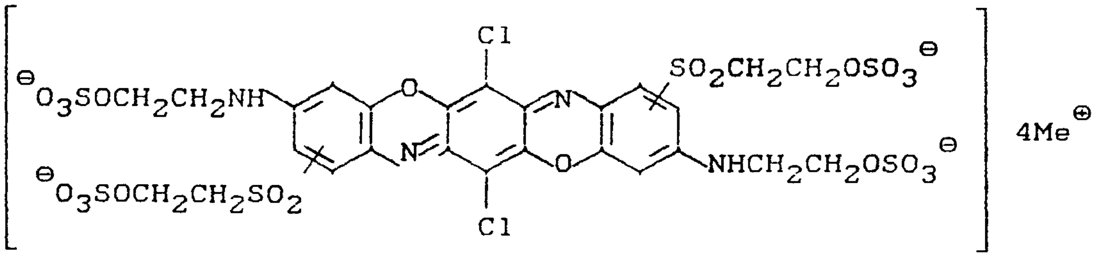

worin

$Me^{\oplus}$ ein wasserlöslichmachendes Kation ist, wobei mindestens 1 Äquivalent der Kationen ein Lithiumion ist und eine Mischung von $Li^+$ mit $Na^+$ vorliegt, dadurch gekennzeichnet, daß man Lösungen mit einem pH von 1 bis 6 des unmittelbar bei der Synthese anfallenden Farbstoffs einem Membrantrennverfahren unterwirft, wobei die Lösung während des Membrantrennverfahrens schwefelsauer ist.

Geeignete Kationen in der Formel (I) sind solche, die zu einer guten Löslichkeit des Farbstoffs in Wasser führen, d.h. insbesondere Protonen, Alkali- und Ammoniumionen.

Bevorzugt sind Mischungen von $Li^+$ mit $H^+$, $K^+$, $Na^+$, $NH_4{}^+$ mit einem $Li^+$-Anteil > 1 Äquivalent.

Die Herstellung von konzentrierten, lagerstabilen Reaktivfarbstofflösungen über Membrantrennverfahren ist allgemein bekannt und wird in einer Vielzahl von Veröffentlichungen beschrieben, wie z.B. in DE-A 2 948 292, DE-A 3 148 878, EP-A 41 240, EP-A 59 782 und EP-A 11 4031.

Überraschenderweise wurde nun gefunden, daß im Gegensatz zu allen darin beschriebenen Farbstoffen eine Lösung des Farbstoffs der Formel (1), hergestellt über ein Membrantrennverfahren im Vergleich zu Lösungen des Farbstoffs, die nicht über ein Membrantrennverfahren hergestellt wurden, in Klotz-Dampf-Färbeverfahren deutlich höhere Farbausbeuten ergibt. Aus der EP-A 210 378 ist bereits ein Verfahren zur Herstellung konzentrierter Lösungen eines Farbstoffs vom Typ der Formel 1 bekannt, jedoch sind hierbei zusätzliche Maßnahmen erforderlich und eine erfindungsgemäß erreichbare Abwasserreduzierung tritt nicht ein.

Der Farbstoff der Formel I und dessen Herstellung sind bekannt (vgl. EP-A 1 535 99 und 141 996):
Für die Herstellung der bei dem erfindungsgemäßen Verfahren einzusetzenden Farbstofflösungen können verschiedene Ausgangsmaterialien verwendet werden:

- die aus der Reaktionsbrühe ausgesalzene feuchte Preßpaste oder -vorzugsweise
- die auf pH = 2,5 abgestumpfte schwefelsaure Kondensationslösung des Reaktivfarbstoffs der Formel (I), hergestellt gemaß jener EP-A 153 599. Die Lösung des Farbstoffs wird über einen Membrantrennprozeß aufkonzentriert und gegebenenfalls vor der Aufkonzentrierung gereinigt. Der Farbstoffgehalt in der Lösung vor dem Membrantrennprozeß ist mindestens 1,5 Gew.-%, vorzugsweise 3,5-9,5 Gew.-% bei einem pH-Wert von 1-6, vorzugsweise von pH 3-5.

Die Reinigung der Farbstofflösung wird dadurch erzielt, daß man einen Teil oder die Gesamtmenge des Permeats, das während des Membrantrennprozesses entzogen wird, durch entmineralisiertes Wasser ersetzt.

Zur Anwendung kommende Membrantrennverfahren sind z.B. Reversosmose, Ultrafiltration, Dialyse, Elektrodialyse oder auch Kombinationen zwischen den genannten Verfahren.

Vorzugsweise wird die Druckpermeation, also Reversosmose und Ultrafiltration angewandt.

Bei diesem Verfahren wird eine Lösung unter Druck über eine semipermeable Membran geleitet. Dabei permeieren je nach dem "cut off level" der verwendeten Membran Wasser, anorganische Salze sowie Reaktionsvor- und - nebenprodukte die Membran.

Der Farbstoff sollte von der verwendeten Membran überwiegend, vorzugsweise zu über 95 % zurückgehalten werden.

Solche Membranen können aus den verschiedensten Materialien sein, wie z.B. Cellulosedi- oder -triacetat, regenerierter Cellulose, Polyamiden, Polysulfonen, Polyacrylnitril, Polyolefinen u.a.

Aber auch andere Membranen wie sie z.B. in den Veröffentlichungen EP-A 25 973, EP-A 26 399, EP-A 82 355, DE-A 2 502 254, US 4 247 401 oder EP-A 194 546 beschrieben sind, kommen in Betracht.

Desweiteren solche aus porösem Glas oder "dynamische" Membranen bei denen z.B. ein Schwermetalloxid auf einen porösen Träger aufgeschwemmt ist.

Die Form des Moduls der die Membranen enthält ist beliebig. Üblicherweise können folgende Membran- bzw. Modulformen eingesetzt werden: Hohlfaser-, Hohlfeinfaser-, Tubular-, Wickel- oder Platten-Rahmen Module.

Die anzuwendenden Drücke richten sich nach den Erfordernissen des jeweiligen Moduls und der jeweiligen Membran.

Der pH-Wert und die Temperatur sind bezüglich der Membran bzw. des Moduls nicht kritisch, da für alle pH-und Temperaturbereiche geeignete Membranen und Modulen zur Verfügung stehen.

Nach dem Membrantrennprozeß erhält man konzentrierte Lösungen des Farbstoffes der Formel (1), die gegebenenfalls noch gepuffert werden können.

Als geeignete Puffersubstanzen können beispielsweise Na-Acetat, Borsäure, Phosphat- und/oder Citratpuffer Verwendung finden.

Die erfindungsgemäßen konzentrierten, wäßrigen, lagerstabilen Lösungen des Farbstoffs der Formel (1) enthalten
8 bis 30 %, vorzugweise 12 bis 25 % Farbstoff der Formel (1)
0 bis 6 %, vorzugsweise 0 bis 3 % $SO_4^{--}$
0 bis 1 %, vorzugsweise 0 bis 0,5 % $Cl^-$
0 bis 1 % Puffersubstanz
sowie Wasser ad 100 %.

Der pH-Wert der Lösungen liegt vorzugsweise bei pH 3-5.

Gegenstand der vorliegenden Erfindung sind ferner die Verwendung der konzentrierten, wäßrigen, lagerstabilen Reaktivfarbstofflösungen zur Herstellung von Färbebädern, Klotzflotten und Druckpasten zum Färben und Bedrucken von natürlichen und regenerierten Cellulosefasern, wie vor allem Baumwolle und Viskose.

Beispiel 1

15 kg einer Lösung enthaltend 6,25 % Reinfarbstoff der Formel (1) und 4,2 % $SO_4^{2-}$ bei einem Kationenverhältnis Mol Na : Li : K wie 1 : 55 : 8,5 werden bei einer Temperatur von ca. 25 °C, einem pH-Wert von 4 und einem Druck von 40 bar auf einem Platten-Rahmen-Modul aufkonzentriert, wobei eine handelsübliche Composite-Membran (Trägerschicht: Polysulfon, Membranschicht: Polyamid) verwendet wird, die den Farbstoff zu mehr als 99 % zurückhält. Nach der Entfernung von 18 kg salzhaltigem Permeat wird das Konzentrat mit 4 kg demineralisiertem Wasser verdünnt und mit 50 g Borsäure gepuffert.

Beispiel 2

Es wird analog Beispiel 1 verfahren, wobei folgende molare Kationenverhältnisse vorliegen:

| | | Na | : | Li | : | K | : | $NH_4$ |
|---|---|---|---|---|---|---|---|---|
| Bsp. 2 | : | 1 | : | 1 | : | 0 | : | 1 |

Die aus o.g. Beispiel resultierende Lösung weist gute anwendungstechnische Eigenschaften auf.

Die Flüssigmarke kann direkt Verwendung finden zur Herstellung von Färbebädern, Klotzflotten und Druckpasten zum Färben von natürlichen und regenerierten Cellulosefasern, wie Baumwolle und Viskose. Mit einer Flotte bestehend aus 50 g einer gemäß Beispiel 1 hergestellten Flüssigmarke, enthaltend 15 % Reinfarbstoff der Formel (1), 10 g eines Polyacrylat-Verdickers, 5 g eines Netzmittels auf Basis Ester einer anorganischen Säure und Rest Wasser wird bei 20 °C auf Baumwolle und 70 % Flottenauftrag im Foulard geklotzt.

Nach Zwischentrocknung (2 Min. 120 °C) wird mit 250 g/l NaCl, 10 g/l NaOH 38° Be bei 70 % Flottenaufnahme geklotzt und anschließend mit Sattdampf 1 Min, 102 °C zur Fixierung gedämpft, Nach Auswaschen (4 x bei 80 °C) erhält man im Vergleich zum Einsatz einer nicht über Ultrafiltration hergestellten Farbstofflösung gleicher Farbstoffmenge eine 20 % tiefere Färbung im brillant-blauen Ton.

## Patentansprüche

1. Verfahren zur Herstellung von konzentrierten lagerstabilen wäßrigen Lösungen des Farbstoffs der Formel

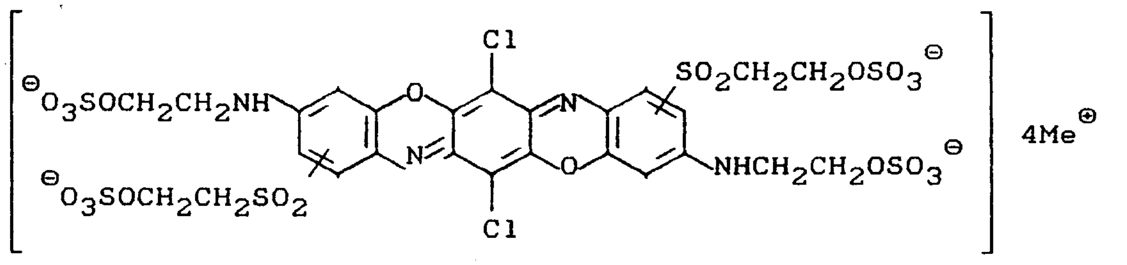

worin
Me⊕ ein wasserlöslichmachendes Kation ist, wobei mindestens 1 Äquivalent der Kationen ein Lithiumion ist und eine Mischung von $Li^+$ mit $Na^+$ vorliegt, dadurch gekennzeichnet, daß man Lösungen mit einem pH von 1 bis 6 des unmittelbar bei der Synthese anfallenden Farbstoffs einem Membrantrennverfahren unterwirft, wobei die Lösung während des Membrantrennverfahrens schwefelsauer ist.

2. Verfahren nach Anspruch 1, dadurch gekennzeichnet, daß der pH-Wert der Lösung während des Membrantrennverfahrens 1 bis 6 beträgt.

3. Verfahren nach Anspruch 1, dadurch gekennzeichnet, daß der pH-Wert während des Membrantrennverfahrens 3 bis 5 beträgt.

4. Verwendung der Färbepräparationen erhalten gemäß Anspruch 1 zum Färben und Bedrucken von Cellulosefasern.

## Claims

1. Process for the preparation of concentrated storage-stable aqueous solutions of the dyestuff of the formula

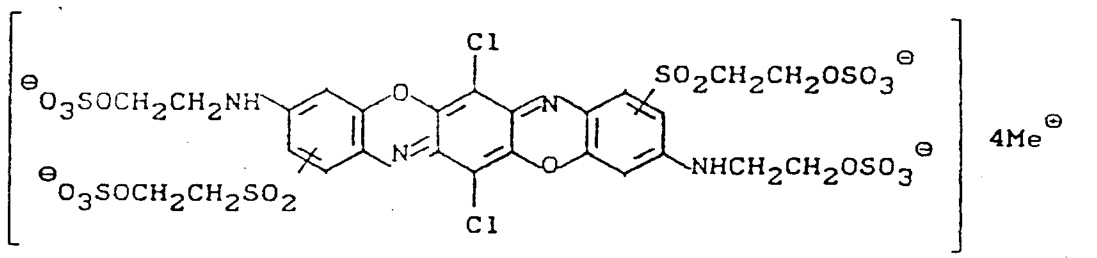

wherein
Me⊕ is a cation conferring water-solubility, at least 1 equivalent of the cations being a lithium ion and a mixture of $Li^+$ and $Na^+$ being present, characterized in that solutions having a pH of 1 to 6 of the dyestuff obtained directly on synthesis are subjected to a membrane separation process, the solution being acidic with sulphuric acid during the membrane separation process.

2. Process according to Claim 1, characterized in that the pH of the solution is 1 to 6 during the membrane separation process.

3. Process according to Claim 1, characterized in that the pH is 3 to 5 during the membrane separation process.

4. Use of the dyeing preparations obtained according to Claim 1 for dyeing and printing cellulose fibres.

## Revendications

1. Procédé de production de solutions aqueuses concentrées, stables à l'entreposage, du colorant de formule

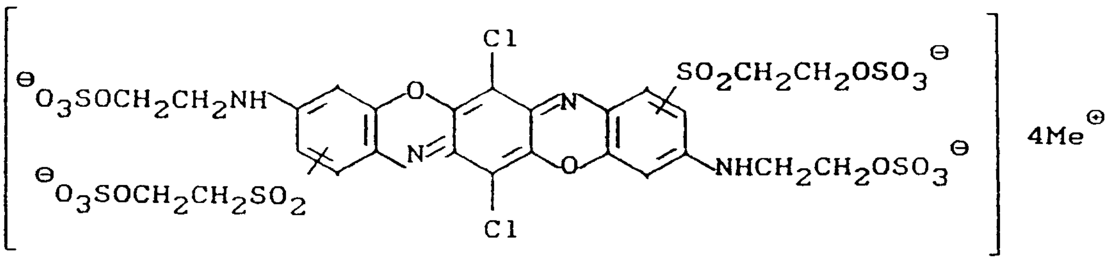

dans laquelle
$Me^{\oplus}$ désigne un cation hydrosolubilisant, au moins un équivalent des cations étant un ion lithium et un mélange de $Li^+$ avec $Na^+$ étant présent, caractérisé en ce qu'on soumet des solutions ayant un pH de 1 à 6 du colorant obtenu directement dans la synthèse à un processus de séparation à l'aide d'une membrane, la solution étant sulfurique pendant le processus de séparation à l'aide d'une membrane.

2. Procédé suivant la revendication 1, caractérisé en ce que le pH de la solution pendant le processus de séparation à travers une membrane s'élève à une valeur de 1 à 6.

3. Procédé suivant la revendication 1, caractérisé en ce que le pH pendant le processus de séparation à l'aide d'une membrane s'élève à une valeur de 3 à 5.

4. Utilisation des préparations tinctoriales obtenues conformément à l'exemple 1 pour la teinture et l'impression de fibres cellulosiques.